# EUROPEAN PATENT SPECIFICATION

(11) **EP 3 305 552 B1**
(45) Date of publication and mention of the grant of the patent: **28.07.2021**
(21) Application number: 16807111.6
(22) Date of filing: 07.06.2016
(51) Int. Cl.: B60C 11/00, B60C 11/03, B60C 11/12, B60C 11/13

(54) **TIRE**
REIFEN
PNEUMATIQUE

(30) Priority: 08.06.2015 JP 2015115910
(43) Date of publication of application: 11.04.2018
(73) Proprietor: Bridgestone Corporation, Tokyo 104-8340 (JP)
(72) Inventor: HIRAISHI, Tomohiro, Tokyo 104-8340 (JP)
(74) Representative: Oxley, Robin John George
(86) International application number: PCT/JP2016/002747
(87) International publication number: WO 2016/199402

(56) References cited:
- EP-A2- 0 917 970
- EP-A2- 2 537 688
- EP-A2- 2 610 081
- EP-A2- 2 752 309
- JP-A- 2000 273 245
- JP-A- 2006 348 149
- JP-A- 2015 016 751
- JP-A- 2015 044 512
- RHESCA: "TAC1000", , 9 October 2012 (2012-10-09), XP002780082, Retrieved from the Internet: URL:http://www.rhesca.co.jp/language/engli sh/pdf/TAC.pdf [retrieved on 2018-04-13]

## Description

### TECHNICAL FIELD

The present invention relates to a tire, in particular, a tire having excellent drainage performance and steering stability.

### BACKGROUND

Customarily in a tire, a drainage performance is ensured by disposing on its tread surface circumferential grooves extending along a tire equator. From the viewpoint of further improving the drainage performance, there are cases of disposing on land portions such as ribs, blocks and the like a plurality of so-called sipes, which are narrow grooves formed by cutting into the land portions.

For example, PTL1 describes a tire having a drainage performance on wet road surface improved by disposing, on land portions partitioned by a plurality of circumferential grooves on a tread surface of the tire, a plurality of narrow grooves of which both ends open to the circumferential grooves, and by devising a shape of the narrow grooves. Attention is also drawn to the disclosures of EP2610081, EP2752309, EP2537688, EP0917970 and to the description of the TAC1000, which is a Pressure-Sensitive Tack of Adhesive Test equipment, which can be found at www.rhesca.co.jp/language/english/pdf/TAC.pdf.

### CITATION LIST

### Patent Literature

PTL1: JP2009-51453A

### SUMMARY

The tire as described in PTL1 achieves improvement of the drainage performance by disposing a plurality of sipes on the land portions of the tread, but causes deterioration of a rigidity of the land portions depending on the number of sipes because that the land portions are divided by the sipes. Such deterioration of the rigidity of the land portions particularly causes deterioration of a steering stability on dry road surface, and thus suppression of deterioration of the land portion rigidity in a tire applied with sipes is desired.

Then, the present invention aims to provide a tire capable of achieving both the drainage performance on wet road surface and the steering stability on dry road surface at a high degree.

### (Solution to Problem)

We intensively studied the means for improving the drainage performance on wet road surface and the steering stability on dry road surface. As a result, we discovered by differing the functions of the sipes on wet road surface and on dry road surface, i.e., by varying the mode of the sipes depending on the road surface environment, it is possible to achieve both the drainage performance on wet road surface and the steering stability on dry road surface.

The present invention is made based on the aforementioned findings.

The tire of the present invention is as claimed in claim 1.

Note that the "tackiness" in the present invention refers to a tackiness of a vulcanized rubber, which is a force at a peak time measured with a TACKINESS TESTER (manufactured by Rhesca Co., Ltd.), by respectively setting a cylindrical-shape probe (diameter: 3 mm, made of stainless steel) and a 2 mm thick vulcanized rubber plate fixed to a metallic plate in a watery environment or in a 90°C environment, pressing the probe on the rubber at a speed of 30 mm/min until the load becomes 2.94 N, maintaining such load for 20 seconds, and pulling away the probe at a speed of 120 mm/min. Further, the "watery environment" refers to a state where a 1 mm thick water film exists directly under the probe when measuring the tackiness, and the "90°C environment" refers to a state where the temperature of the cylindrical-shape probe and the vulcanized rubber plate is maintained at 90°C in a dry state when measuring the tackiness.

### (Advantageous Effect)

According to the present invention, it is possible to provide a tire capable of achieving both the drainage performance on wet road surface and the steering stability on dry road surface.

### BRIEF DESCRIPTION OF THE DRAWINGS

FIG. 1 is a development view illustrating a tread surface of a tire in accordance with one embodiment of the invention;
FIG. 2 is a cross-sectional view along the A-A line in FIG. 1;
FIG. 3 is a cross-sectional view along the B-B line in FIG. 1;
FIG. 4 is a cross-sectional view along the C-C line in FIG. 1;
FIG. 5 is a cross-sectional view of a sipe 5;
FIG. 6 is a development view illustrating a tread surface of a tire in accordance with another embodiment of the invention;
FIG. 7 is a cross-sectional view along the D-D line in FIG. 6;
FIG. 8 is a cross-sectional view of the sipe 5;
FIG. 9 is a cross-sectional view along the E-E line in FIG. 6; and
FIG. 10 is a development view illustrating a tread surface of a tire in accordance with another embodiment of the invention.

### DETAILED DESCRIPTION

Hereinafter, the tire of the invention will be described in detail with reference to the drawings.

Note that an internal enforcing structure, etc. of the tire is the same as an ordinary radial tire, and thus is omitted in the drawings here.

### [Embodiment 1]

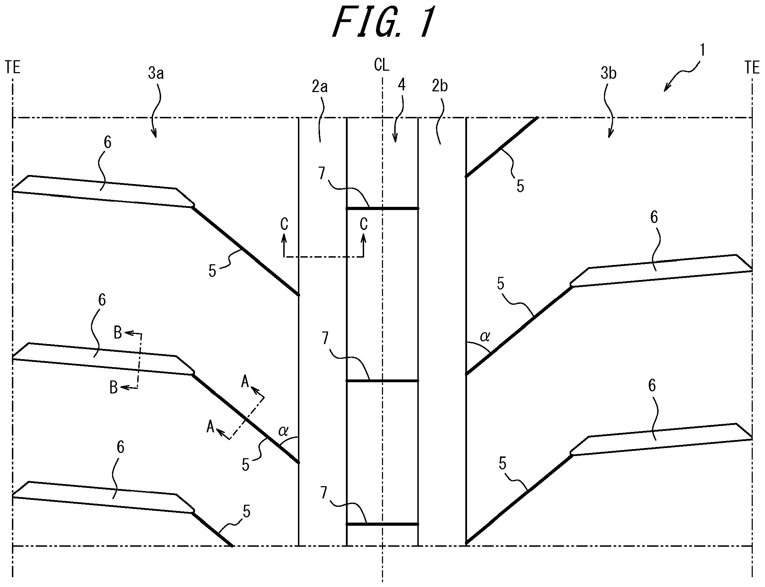

FIG. 1 is a development view showing a tread surface of a tire in accordance with one embodiment of the invention. As illustrated in FIG. 1, this tire has, on a surface of a tread (hereinafter referred to as the tread surface) 1, a plurality of land portions 3a, 3b and 4 partitioned by a plurality of (two as for the illustrated example) circumferential grooves 2a, 2b extending along a tire equator CL and tread edges TE.

As illustrated in FIG. 1, one or both among the land portions 3a and 3b adjacent to the tread edges TE (both land portions 3a and 3b as for the illustrated example) have a plurality of sipes 5 arranged at a spacing in a tread circumferential direction. The sipes 5 are grooves with a narrow opening width, and have one end opening to the circumferential groove 2a or 2b, and the other end extending toward the tread edge TE side and ending in the vicinity of a widthwise center of the land portion 3a or 3b. The sipes 5 are arranged at a constant spacing in the tread circumferential direction on each one of the land portions 3a and 3b, where the land portions 3a and 3b have such arrangement displaced from each other in the tread circumferential direction.

The sipes 5 enhance the drainage performance of the tire by repeating a procedure of containing therein moisture within a ground contact region of the tread and then discharging the moisture out of the ground contact region, when running on wet road surface.

The illustrated example has lateral grooves 6 extending from the tread edges TE to the vicinity of the widthwise centers of the land portions 3a and 3b, where the sipes 5 connect to the lateral grooves 6 in the vicinity of the widthwise centers of the land portions 3a and 3b.

Here, the reason for disposing the sipes on one or both land portions adjacent to the tread edge TE is as follows. This is because that when the tire rotates with a load applied, a ground contact pressure distribution in the tread width direction is higher in a region adjacent to the tread edges as compared to the central region, and thus improvement of the drainage performance in this region adjacent to the tread edges is effective for improving the so-called wet performance. Therefore, the effect can be achieved by disposing the sipes on at least one of the land portions adjacent to the tread edges TE, but it is preferable that the sipes are disposed on both land portions. Further, the sipes may be disposed on the land portions other than the land portions 3a and 3b, and as for the illustrated example, sipes 7 connecting the circumferential grooves 2a and 2b are disposed on the land portion 4 on the tread widthwise center.

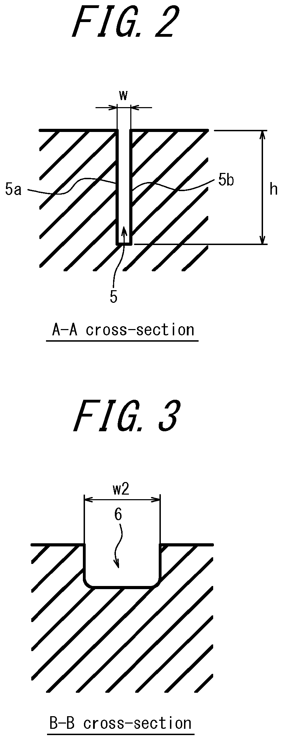

Next, the cross section of the sipe 5 along the A-A line in FIG. 1 in a tire product before being mounted to a vehicle is as shown in FIG. 2. As illustrated in this drawing, it is preferable that the sipe 5 has an opening width w on the tread surface of 0.10 mm or more and 0.35 mm or less. If the width w is 0.10 mm or more, in the ground contact region, sidewalls 5a, 5b partitioning the sipe 5 are partially or entirely separated from each other, which is an open state and ensures the drainage performance. On the other hand, if the width w is more than 0.35 mm, the sidewalls do not even come into contact with each other partially, which causes a risk that the land portion rigidity is greatly deteriorated. Note that although the illustrated example shows a rectangular shape partitioned by the sidewalls and a bottom portion, the bottom portion may also be shapes such as a V-shape cross section, a U-shape cross section and the like. From the viewpoint of achieving both the drainage performance and the steering stability, it is preferable that a depth h of the sipe is 2 mm or more and 7 mm or less.

Moreover, the cross-sectional view of the lateral groove 6 along the B-B line in FIG. 1 is as illustrated in FIG. 3. In the illustrated example, a border portion of the groove walls and the bottom portion is an arc shape, but the portion from the groove walls to the bottom portion may also be a rectangular shape or a V-shape. Note that it is preferable that the opening width w2 of the lateral groove 6 on the tread surface is 5 mm or more and 20 mm or less.

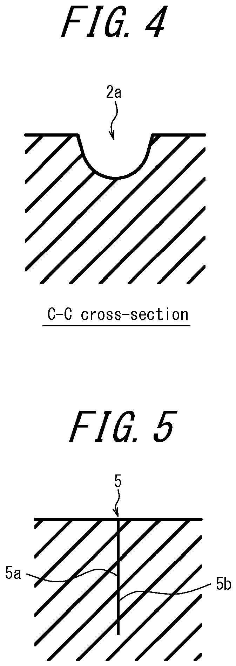

The cross section of the circumferential grooves 2a, 2b along the C-C line in FIG. 1 is as illustrated in FIG. 4. In the illustrated example, the cross section of the bottom portion is approximately a semicircular shape, but there is no problem that the portion from the groove walls to the bottom shape is a rectangular shape, or the bottom portion is a V-shape. The groove walls and the bottom portion may also partition a rectangular shape or a U-shape. Moreover, from the viewpoint of the drainage performance, it is preferable that the circumferential grooves 2a and 2b are formed spanning an entire circumference of the tire.

In a tire having a plurality of sipes 5 on at least one among the land portions 3a and 3b adjacent to the aforementioned tread edges TE, regarding the land portion having the sipes 5 disposed thereon, it is important to define its tackiness according to (1) and (2).
(1) In watery environment ... 1.96 N or less
(2) In 90°C environment ... 2.16 N or more

As mentioned above, if the sipes 5 are disposed on at least one among the land portions 3a and 3b adjacent to the aforementioned tread edges TE, the drainage performance may be improved effectively, while on the other hand, on dry road surface, where the drainage performance is not a problem, there is a risk that the disposal of the sipes 5 on the land portions adjacent to the tread edges TE deteriorates the steering stability in contrary. As mentioned above, since the ground contact pressure distribution in the tread width direction when the tire rotates with a load applied is higher in the region adjacent to the tread edges as compared to the central region, from the viewpoint of the steering stability, deterioration of the land portion rigidity due to introduction of the sipes within this adjacent region is undesirable.

Then, as mentioned above, by defining the tackiness of the land portion at each predetermined temperature, both the drainage performance on wet road surface and the steering stability on dry road surface were achieved at a high degree.

First, it is important that the tackiness at 90°C is 2.16 N or more. From an initial phase of running of a tire running on dry road surface, heat occurs unavoidably due to a hysteresis loss of the rubber. As a result, the temperature of the tread rubber ordinarily becomes around 90°C immediately after the initiation of running. Moreover, in a high performance tire provided for circuit driving, it is common sense to consciously raise the tire temperature on purpose by running-in before formal running.

In a tire within a temperature range of around 90°C, if the tackiness of the land portion is within the range of 2.16 N or more, due to a procedure of repeated deformation of the sipes within a ground contact region accompanying an input of force when the tire rotates with a load applied, at the time when the sidewalls partitioning the sipes come into contact partially or entirely with each other, the sidewalls are likely to be adhered and fixed to each other. Accompanying the temperature rise of the tire when running on dry road surface, the sidewalls partitioning the sipes transfer from the state as illustrated in FIG. 2 until stabilized in the state as illustrated in FIG. 5, which, as a result, brings an effect as if the sipes partitioning the land portions almost disappear. Therefore, the deterioration of the rigidity due to the partitioning of the land portions is suppressed, and the land portion rigidity of the region adjacent to the tread edges, which has a high ground contact pressure when the tire rotates with a load applied, is improved. As a result, the steering stability may be ensured.

In such case when running on dry road surface, by fixing to each other the sidewalls partitioning the sipes on the land portions having the aforementioned tackiness, it is possible to form an integrated land portion and to exhibit excellent steering stability. In particular, by fixing to each other the sipe sidewalls on the land portions having the aforementioned tackiness, in the case of lane change or cornering of the vehicle, a shear force is exerted along the extension direction of the sipe, and the sipe sidewalls are maintained in the fixed state. Therefore, excellent steering stability may be maintained without the risk of collapse of the integration of the land portions.

On the other hand, in the case where the tire is running in a watery environment, typically when running on wet road surface such as running in the rain, etc., it is necessary to open the sipes to thereby exhibit its drainage performance. The drainage performance may be ensured if the sipes keep open from the beginning, but in the case of transferring from running on dry road surface to running on wet road surface, etc. as mentioned above, it is necessary to open the sipe in a closed stated.

Here, if moisture is provided continuously on the running road surface when transferring from dry road surface to wet road surface, the openings of the sipes on the tread surface are exposed to the moisture on the road surface. As a result, moisture enters the openings and sequentially penetrates in the depth direction due to a capillary phenomenon, and is gradually absorbed into the fixed sipes, which leads to a state where the sidewalls portioning the sipes are exposed to the moisture. In this way, in a land portion of which the tackiness of the sidewalls in a watery environment is 1.96 N or less, the fixed state of the sipe sidewalls cannot be maintained and thus the sidewalls are separated from each other. Due to the separation of the sidewalls, the sipes return to the open state and their original functions are recovered, which, as a result, contributes to the improvement of the drainage performance.

The aforementioned separation of the sipe sidewalls is achieved by absorbing sufficient moisture between the sidewalls, and therefore, in an environment such as stop of rain or intermittent rain, the separation of the sidewalls is insufficient. Therefore, in an aforementioned environment in which moisture is not continuously provided on the road surface, the sidewalls are separated gently. In other words, the degree of opening/closing of the sipes is adjusted depending on the moisture amount on the road surface.

It is further preferable that the tackiness described in the aforementioned range is 1.72 N or less in a watery environment and 2.45 N or more at 90°C. Note that a lower limit of the tackiness in the watery environment and an upper limit of the tackiness in the 90°C environment are not specifically limited.

Note that in the case where the land portions other than the land portions 3a and 3b have sipes, the tackiness is defined within the aforementioned range as well. In the illustrated example, since the land portion 4 on the tread widthwise center has sipes, the tackiness is beneficially defined within the aforementioned range.

The aforementioned tackiness may be adjusted by appropriately varying the compounding ratio of the rubber material, and the compound and its ratio may be appropriately designed in view of the correlation with other tire performances. In particular, by setting a resin amount to 10 parts by mass or more per 100 parts by mass of rubber components other than resin, it is easy to adjust the tackiness within the aforementioned range.

The sipes 5 may be any one as long as extending toward the tread edge TE sides from the circumferential direction 2a or 2b, but preferably extend at an inclination angle α (see FIG. 1) of 30° or more and 60° or less with respect to the equator CL. According to such inclination angle, on wet road surface, the moisture absorbed into the sipes within the ground contact region can be easily discharged to the tread edge sides. Further, a widthwise edge component is increased, which may comprehensively improve the performances, particularly on wet road surface.

More preferably, the inclination angle α with respect to the equator CL of the sipes 5 is 40° or more and 50° or less. In this case, it is possible to obtain better drainage performance and edge effect.

Note that the sipes 5 may be arranged in a manner disposing a phase difference in the tire circumferential direction on both tire widthwise sides of the equator CL.

### [Embodiment 2]

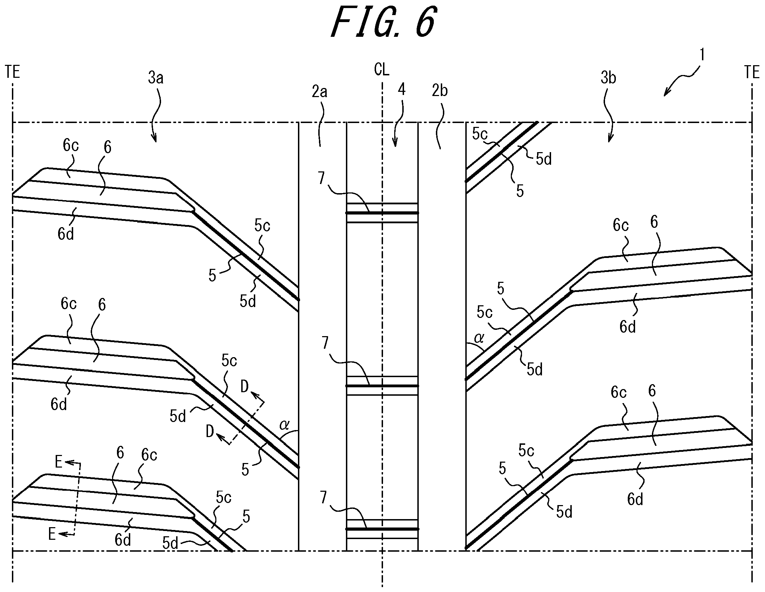

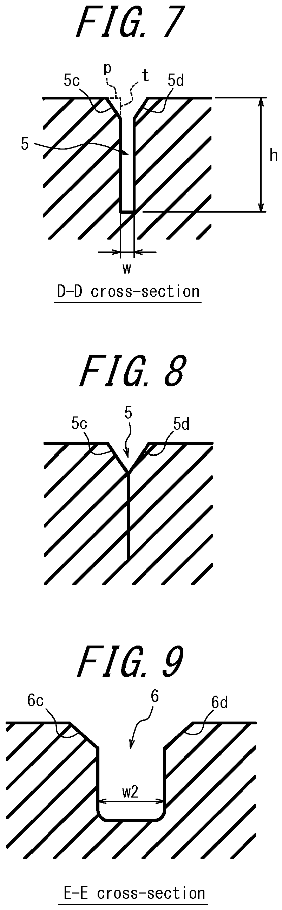

FIG. 6 is a developed view of a tread surface 1 of another embodiment of the invention. Namely, in the configuration as illustrated in FIG. 1, among sidewalls partitioning the sipes 5, an opening edge of at least one of the sidewalls may be chamfered, and as for this embodiment, the case where both opening edges of the sidewalls partitioning the sipes 5 are chamfered is as illustrated in FIG. 6. Note that the configurations in FIG. 6 which are the same as FIG. 1 are marked with the same reference signs as FIG. 1, the description thereof being omitted. Moreover, FIG. 7 is a cross-sectional view along the D-D line of the sipes 5 in FIG. 6 in a tire product before being mounted to a vehicle. Further, FIG. 8 is a cross-sectional view of the sipes 5 in a state where the sidewalls partitioning the sipes 5 are fixed to each other.

In FIG. 6, 5c and 5d refer to chamfer portions in the case where the opening edges of both sidewalls 5a and 5b partitioning the sipes 5 are chamfered linearly in a manner inclined to a sipe depth direction from the tread surface as illustrated in FIG. 7.

By disposing the aforementioned chamfer portions 5c and 5d, as illustrated in FIG. 7, a space with an approximately V-shape cross section is newly formed on the opening portion of the sipe by the chamfer portions 5c and 5d facing each other. Due to the space formed in this way, as compared to a sipe 5 without being chamfered, a groove volume in the vicinity of the tread surface is increased, thus improving the drainage performance on wet road surface. Since the tackiness of the land portions 3a, 3b with the sipes 5 disposed thereon is defined within the aforementioned range in this tire as well, as mentioned above, the originally open sipes 5 transfer from the state in FIG. 7 to the state in FIG. 8 accompanying the tire temperature rise after initiation of running on dry road surface. Subsequently, when transferring from running on dry road surface to wet road surface on which moisture is provided sufficiently, in the originally closed state of the sipes as illustrated in FIG.8, the moisture on the road surface is immediately absorbed into the space with an approximately V-shape cross section formed by the chamfer portions 5c and 5d, and is maintained in this space until discharged therefrom. As a result, the entry of the moisture into the sipes 5 due to a capillary phenomenon is accelerated, and the separation of the sidewalls 5a, 5b is achieved without delay.

Here, the chamfer portions 5c and 5d are desirably formed in a manner such that a chamfer width p in a direction perpendicular to the extension direction of the sipes 5 is 100% or more and 2000% or less of the opening width w of the sipes 5 on the tread surface, and a chamfer depth t in a radial direction is 10% or more and 40% or less of a depth h of the sipes. This is because that although a chamfer width and depth are necessary for forming a space capable of achieving a high drainage performance on wet road surface, if the depth t is excessively large, there is a risk of deterioration of the fixing function of the sipes 5 for suppressing the rigidity deterioration, and as well, if the width p is excessively large, there is a risk of deterioration of the drainage performance. Moreover, in the illustrated example, the aforementioned width and depth are identical in 5c and 5d, but the width and the depth may be different in 5c and 5d as long as within the range in the aforementioned configuration.

Moreover, the lateral grooves 6 may also be provided with the chamfer portions 6c and 6d. FIG. 9 is a cross-sectional view of the lateral grooves 6 along the E-E line in FIG. 6, and 6c and 6d refer to chamfer portions in the case where the opening edges of both groove walls partitioning the lateral grooves 6 are chamfered linearly in a manner inclined to a sipe depth direction from the tread surface as illustrated in FIG. 9.

### [Embodiment 3]

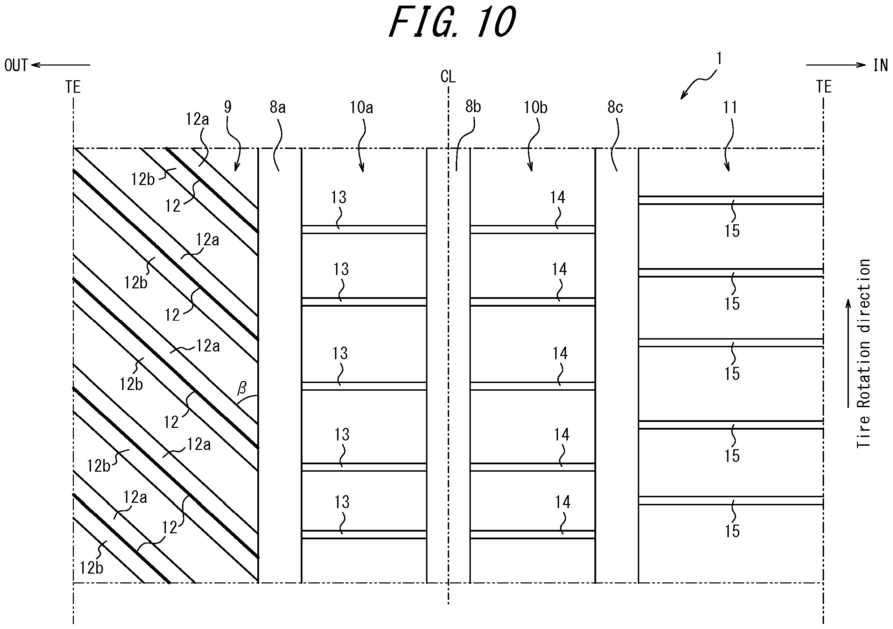

FIG. 10 is a development view illustrating a tread surface 1 of another embodiment of the invention. The tire according to the present embodiment is a tire with a specified rotation direction, which has a so-called unsymmetrical pattern shape with different tread patterns on one side and the other side sandwiching the tire equator CL, a land portion 9 adjacent to one of the tread edges TE being mounted in a configuration as a widthwise outer side of the vehicle. Note that an arrow IN in FIG. 10 illustrates a direction of a vehicle inner side when mounting the tire according to the present embodiment to the vehicle (hereinafter referred to as the tire mounting inner side), and an arrow OUT illustrates a direction of a vehicle outer side when mounting the tire according to the present embodiment to the vehicle (hereinafter referred to as the tire mounting outer side).

As illustrated in FIG. 10, this tire has land portions 9, 10a, 10b and 11 partitioned by three circumferential grooves 8a, 8b and 8c extending along the tire equator CL on the tread surface 1 and tread edges TE. According to the illustrated example, the land portions 10a and 10b may be symmetrical with the equator CL as an axis.

In such type of tire, as illustrated in FIG. 10, at least the land portion 9 adjacent to the tread edge TE on the tire mounting outer side has a plurality of sipes 12 arranged at a constant spacing in the tread circumferential direction.

The sipes 12, similarly as the sipes 5 in FIG. 1, enhances the drainage performance of the tire by repeating the procedure of containing moisture within the ground contact region of the tread, and discharging the same out of the ground contact region.

Here, the reason for disposing the sipes 12 on at least the land portion 9 adjacent to the tread edge TE on the tire mounting outer side is as follows. A ground contact pressure distribution on tread widthwise sides is higher as compared to a central region when the tire rotates with a load applied, and tends to be high particularly on the tire mounting outer side at the time of cornering, etc. during high speed running. Therefore, since the so-called wet performance may be effectively improved by enhancing the drainage performance of the land portion adjacent to the tread edge TE on the tire mounting outer side, the sipes 12 are formed on at least the land portion 9.

The aforementioned land portion 9 adjacent to the tread edge TE on the tire mounting outer side has a tackiness defined the same as the land portion with the sipes 5 disposed in FIG. 1.

As mentioned above, by defining the tackiness of the land portion 9 at each predetermined temperature, the drainage performance on wet road surface and the steering stability on dry road surface may be achieved at a high degree.

The sipes 12 may be any one as long as extending from the circumferential groove 8a toward the tread edge TE side, but preferably extend at an inclination angle β (see FIG. 10) of 30° or more and 60° or less with respect to the equator CL. According to inclination angle, it is possible to comprehensively improve the drainage performance on wet road surface, and the wet performance due to increase of an edge component.

The sipes 12 may be provided with chamfer portions 12a and 12b as illustrated. Similarly as illustrated in FIG. 7, these chamfer portions refer to chamfer portions in the case where the opening edges of both groove walls and 5b partitioning the lateral grooves 6 are chamfered linearly in a manner inclined to a sipe depth direction from the tread surface. Note that in the case of using either one of 12a and 12b as a chamfer portion, in such type of unsymmetrical pattern, it is preferable that the chamfer portion is 12b, which contacts the ground later among the two sandwiching the sipe 12 when rotating forward.

Note that the land portions 10a, 10b, 11 may respectively have circumferential grooves 8a, 8b, 8c, which partition each land portion, and lateral grooves 13, 14, 15, of which both ends open to the tread edge TE on the tire mounting inner side, formed thereon.

### EXAMPLES

Hereinafter, examples are described without being limited thereto.

Tires with a size of 205/55R16 were experimentally produced respectively at the specs as shown in Table 1 according to the tread patterns as illustrated in FIG. 1 and FIG. 6. Note that the depth h of the sipes of all the sample tires were set to 4 mm. Each obtained sample tire was installed to a rim (size: 6.5J), applied with an internal pressure (240 kPa), mounted to a rear-wheel driving vehicle with a displacement of 2000 cc, and was subjected to the following evaluation by running on a test course in a one-person driving state.

Note that the tackiness in a watery environment and the tackiness in a 90°C environment in Table 1 are values measured according to the aforementioned test procedure.

### [Evaluation of steering performance]

Each aforementioned tire was subjected to evaluation of steering performance via measurement of lap time at the time of running on a test course having a dry road surface and a test course having a wet road surface (water depth: 1mm).

The result thereof was indexed with the evaluation result of the tire according to Sample Tire 1 (comparative example) as 100. Note that a larger index indicates better steering performance.

Further, the opening/closing state of the sipes in each example is shown for evaluating the steering performance. The opening/closing state of the sipes was evaluated by observing, and by judging whether a metallic plate thinner than the sipe width could be inserted. Note that the case where the sipes are observed as closed and the metallic plate cannot be inserted into the sipes were evaluated as fixed, the case where the sipes are observed as open and the metallic plate can be inserted into the sipes were evaluated as not fixed, and the case where the sipes is observed as partially not fixed in the extension direction or the metallic plate can be inserted only midway in the depth direction was evaluated as partially not fixed.

### [Table 1]

**[Table 11**

| Sample tire | Tread pattern | Sipe | | | | | | | | Remarks |
|---|---|---|---|---|---|---|---|---|---|---|
| | | Target land portion | Tackiness (N) | | Opening width (mm) | Inclination (°) | Chamfer | | | |
| | | | In watery environment | In 90°C environment | | | Chamfer portion | Width p (mm) | Depth t (mm) | |
| 1 | FIG. 1 | 3a, 3b | 1.078 | 0.735 | 0.35 | 45 | None | - | - | Comparative example |
| 2 | FIG. 1 | 3a, 3b | 2.352 | 2.156 | 0.35 | 45 | None | - | - | Comparative example |
| 3 | FIG. 1 | 3a, 3b | 2.156 | 1.47 | 0.35 | 45 | None | - | - | Comparative example |
| 4 | FIG. 1 | 3a, 3b | 1.715 | 2.45 | 0.35 | 45 | None | - | - | Example |
| 5 | FIG. 1 | 3a, 3b | 1.715 | 2.156 | 0.35 | 45 | None | - | - | Example |
| 6 | FIG. 1 | 3a, 3b | 1.715 | 2.156 | 0.10 | 45 | None | - | - | Example |
| 7 | FIG. 1 | 3a, 3b | 1.715 | 2.45 | 0.05 | 45 | None | - | - | Example |
| 8 | FIG. 1 | 3a, 3b | 1.715 | 2.45 | 0.45 | 45 | None | - | - | Example |
| 9 | FIG. 1 | 3a, 3b | 1.715 | 2.45 | 0.35 | 30 | None | - | - | Example |
| 10 | FIG. 1 | 3a, 3b | 1.715 | 2.45 | 0.35 | 60 | None | - | - | Example |
| 11 | FIG. 1 | 3a, 3b | 1.715 | 2.45 | 0.35 | 15 | None | - | - | Example |
| 12 | FIG. 1 | 3a, 3b | 1.715 | 2.45 | 0.35 | 80 | None | - | - | Example |
| 13 | FIG. 6 | 3a, 3b | 1.715 | 1.96 | 0.35 | 45 | 5c, 5d | 3.0 | 1.0 | Comparative example |
| 14 | FIG. 6 | 3a, 3b | 1.715 | 2.058 | 0.35 | 45 | 5c, 5d | 3.0 | 1.0 | Comparative example |
| 15 | FIG. 6 | 3a, 3b | 1.715 | 2.45 | 0.35 | 45 | 5c, 5d | 3.0 | 1.0 | Example |
| 16 | FIG. 6 | 3a, 3b | 1.715 | 2.45 | 0.35 | 45 | 5c | 3.0 | 1.0 | Example |
| 17 | FIG. 6 | 3a, 3b | 1.96 | 2.45 | 0.35 | 45 | 5c, 5d | 3.0 | 1.0 | Example |
| 18 | FIG. 6 | 3a, 3b | 1.764 | 2.45 | 0.35 | 45 | 5c, 5d | 3.0 | 1.0 | Example |
| 19 | FIG. 6 | 3a, 3b | 1.47 | 2.45 | 0.35 | 45 | 5c, 5d | 3.0 | 1.0 | Example |
| 20 | FIG. 6 | 3a, 3b | 1.176 | 2.45 | 0.35 | 45 | 5c, 5d | 3.0 | 1.0 | Example |
| 21 | FIG. 6 | 3a, 3b | 1.715 | 2.744 | 0.35 | 45 | 5c, 5d | 3.0 | 1.0 | Example |
| 22 | FIG. 6 | 3a, 3b | 1.715 | 2.94 | 0.35 | 45 | 5c, 5d | 3.0 | 1.0 | Example |
| 23 | FIG. 6 | 3a, 3b | 1.715 | 2.45 | 0.35 | 45 | 5c, 5d | 0.3 | 1.0 | Example |
| 24 | FIG. 6 | 3a, 3b | 1.715 | 2.45 | 0.35 | 45 | 5c, 5d | 1.0 | 1.0 | Example |
| 25 | FIG. 6 | 3a, 3b | 1.715 | 2.45 | 0.35 | 45 | 5c, 5d | 7.0 | 1.0 | Example |
| 26 | FIG. 6 | 3a, 3b | 1.715 | 2.45 | 0.35 | 45 | 5c, 5d | 10.0 | 1.0 | Example |
| 27 | FIG. 6 | 3a, 3b | 1.715 | 2.45 | 0.35 | 45 | 5c, 5d | 3.0 | 0.1 | Example |
| 28 | FIG. 6 | 3a, 3b | 1.715 | 2.45 | 0.35 | 45 | 5c, 5d | 3.0 | 3.0 | Example |

### [Table 2]

**[Table 2]**

| Sample tire | Wet road surface | | Dry road surface | | Remarks |
|---|---|---|---|---|---|
| | Lap time | Sipe state | Lap time | Sipe state | |
| 1 | 100 | Not fixed | 100 | Not fixed | Comparative example |
| 2 | 90 | Fixed | 120 | Fixed | Comparative example |
| 3 | 90 | Fixed | 95 | Not fixed | Comparative example |
| 4 | 100 | Not fixed | 120 | Fixed | Example |
| 5 | 100 | Not fixed | 115 | Fixed | Example |
| 6 | 100 | Not fixed | 115 | Fixed | Example |
| 7 | 95 | Not fixed | 120 | Fixed | Example |
| 8 | 100 | Not fixed | 105 | Partially not fixed | Example |
| 9 | 100 | Not fixed | 105 | Fixed | Example |
| 10 | 100 | Not fixed | 105 | Fixed | Example |
| 11 | 98 | Not fixed | 103 | Fixed | Example |
| 12 | 98 | Not fixed | 103 | Fixed | Example |
| 13 | 120 | Not fixed | 95 | Not fixed | Comparative example |
| 14 | 120 | Not fixed | 95 | Not fixed | Comparative example |
| 15 | 120 | Not fixed | 120 | Fixed | Example |
| 16 | 110 | Not fixed | 120 | Fixed | Example |
| 17 | 113 | Not fixed | 120 | Fixed | Example |
| 18 | 115 | Not fixed | 120 | Fixed | Example |
| 19 | 120 | Not fixed | 120 | Fixed | Example |
| 20 | 120 | Not fixed | 120 | Fixed | Example |
| 21 | 120 | Not fixed | 120 | Fixed | Example |
| 22 | 120 | Not fixed | 120 | Fixed | Example |
| 23 | 105 | Not fixed | 120 | Fixed | Example |
| 24 | 120 | Not fixed | 120 | Fixed | Example |
| 25 | 120 | Not fixed | 120 | Fixed | Example |
| 26 | 120 | Not fixed | 110 | Fixed | Example |
| 27 | 100 | Not fixed | 120 | Fixed | Example |
| 28 | 120 | Not fixed | 100 | Fixed | Example |

As shown in the test result, as compared to the comparative examples, our examples have better steering stability and lap time on the DRY steering evaluation road, and on the WET steering evaluation road, our examples have better lap time than the comparative examples as well. Therefore, in our examples, it is possible to improve the steering performance of the tire on dry road surface and wet road surface, and to achieve both the steering stability and the drainage performance at a high degree.

- 1: tread surface
- 2a, 2b: circumferential groove
- 3a, 3b: land portion
- 4: central land portion
- 5: sipe
- 5a, 5b: sidewall of sipe
- 5c, 5d: chamfer portion
- 6: lateral groove
- 6c, 6d: chamfer portion
- 7: widthwise sipe
- 8a, 8b, 8c: circumferential groove
- 9: tire mounting outer side land portion
- 10a, 10b: land portion
- 11: tire mounting inner side land portion
- 12: sipe
- 12a, 12b: chamfer portion
- 13, 14, 15: lateral groove
- CL: tire equatorial plain
- TE: tread edge
- OUT: tire mounting outer side
- IN: tire mounting inner side

## Claims

1. A tire comprising a tread surface (1) partitioned into a plurality of land portions (3a, 3b, 4) by a plurality of circumferential grooves (2a, 2b) along an equatorial plane (CL) of the tire and tread edges (TE), wherein:
among the plurality of land portions (3a, 3b, 4), one or both land portions (3a, 3b) adjacent to the tread edges (TE) have a plurality of sipes (5) opening to at least one of either the tread edges (TE) or the circumferential grooves (2a, 2b); **characterized in that**:
a tackiness in a watery environment of the one or both land portions (3a, 3b) having the sipes (5) disposed thereon is 1.96 N or less;
a tackiness in a 90°C environment of the one or both land portions (3a, 3b) having the sipes (5) disposed thereon is 2.16 N or more;
the tackiness refers to a tackiness of the vulcanized rubber of the one or both land portions (3a, 3b) having the sipes (5) disposed thereon, which is a force at a peak time measured by setting a cylindrical-shape probe of 3 mm diameter which is made of stainless steel and a 2 mm thick vulcanized rubber plate fixed to a metallic plate in a watery environment and in a 90°C environment, respectively, pressing the probe on the rubber at a speed of 30 mm/min until the load becomes 2.94 N, maintaining such load for 20 seconds, and pulling away the probe at a speed of 120 mm/min;
watery environment refers to a state where a 1 mm thick water film exists directly under the probe when measuring the tackiness, and
90°C environment refers to a state where the temperature of the cylindrical-shape probe and the vulcanized rubber plate is maintained at 90°C in a dry state when measuring the tackiness.

2. The tire according to claim 1, wherein:
each of the plurality of sipes (5) has an opening width (w) on the tread surface (1) of 0.10 mm or more and 0.35 mm or less.

3. The tire according to claim 1, wherein:
the sipes (5) extend at an inclination angle (α) of 30° or more and 60° or less with respect to the equatorial plane (CL) of the tire.

4. The tire according to claim 1, wherein:
among sidewalls (5a, 5b) partitioning the sipes (5), an opening edge of at least one of the sidewalls (5a, 5b) is chamfered.

## Patentansprüche

1. Reifen, der eine Lauffläche (1) umfasst, die durch eine Vielzahl von umlaufenden Rillen (2a, 2b) entlang einer Äquatorialebene (CL) des Reifens und Laufflächenkanten (TE) in eine Vielzahl von Stegabschnitten (3a, 3b, 4) unterteilt wird, wobei:
unter der Vielzahl von Stegabschnitten (3a, 3b, 4), ein oder beide Stegabschnitte (3a, 3b) angrenzend an die Laufflächenkanten (TE) eine Vielzahl von Lamellen (5) aufweisen, die sich zu mindestens einer von entweder den Laufflächenkanten (TE) oder den umlaufenden Rillen (2a, 2b) öffnen, **dadurch gekennzeichnet, dass**:
ein Haftvermögen des einen oder der beiden Stegabschnitte (3a, 3b), welche die auf denselben angeordneten Lamellen (5) aufweisen, in einer wässrigen Umgebung 1,96 N oder weniger beträgt,
ein Haftvermögen des einen oder der beiden Stegabschnitte (3a, 3b), welche die auf denselben angeordneten Lamellen (5) aufweisen, in einer 90°-Umgebung 2,16 N oder mehr beträgt,
wobei sich das Haftvermögen auf ein Haftvermögen des vulkanisierten Gummis des einen oder der beiden Stegabschnitte (3a, 3b), welche die auf denselben angeordneten Lamellen (5) aufweisen, bezieht, das eine Kraft zu einer Spitzenzeit ist, gemessen durch Setzen einer zylinderförmigen Sonde von 3 mm Durchmesser, die aus rostfreiem Stahl hergestellt ist, und einer 2 mm dicken vulkanisierten Gummiplatte, die an einer metallischen Platte befestigt ist, in eine wässrige Umgebung und in einer 90°-Umgebung, Pressen der Sonde auf dem Gummi mit einer Geschwindigkeit von 30 mm/min, bis die Last 2,94 Nm beträgt, Aufrechterhalten einer solchen Last für 20 Sekunden und Wegziehen der Sonde mit einer Geschwindigkeit von 120 mm/min,
wobei sich wässrige Umgebung auf einen Zustand bezieht, in dem ein 1 mm dicker Wasserfilm unmittelbar unter der Sonde vorhanden ist, wenn das Haftvermögen gemessen wird, und
wobei sich eine 90°-Umgebung auf einen Zustand bezieht, in dem die Temperatur der zylinderförmigen Sonde und der vulkanisierten Gummiplatte in einem trockenen Zustand bei 90 °C gehalten wird, wenn das Haftvermögen gemessen wird.

2. Reifen nach Anspruch 1, wobei:
jede der Vielzahl von Lamellen (5) eine Öffnungsbreite (w) auf der Lauffläche (1) von 0,10 mm oder mehr und 0,35mm oder weniger aufweist.

3. Reifen nach Anspruch 1, wobei:
sich die Lamellen (5) in einem Neigungswinkel (α) von 30° oder mehr und 60° oder weniger in Bezug auf die Äquatorialebene (CL) des Reifens erstrecken.

4. Reifen nach Anspruch 1, wobei:
unter Seitenwänden (5a, 5b), welche die Lamellen (5) unterteilen, eine Öffnungskante mindestens einer der Seitenwände (5a, 5b) abgeschrägt ist.

## Revendications

1. Bandage pneumatique, comprenant une surface de bande de roulement (1) séparée en une pluralité de parties d'appui (3a, 3b, 4) par une pluralité de rainures circonférentielles (2a, 2b) le long d'un plan équatorial (CL) du bandage pneumatique et des bords de la bande de roulement (TE), dans lequel :
parmi la pluralité de parties d'appui (3a, 3b, 4), l'une ou les deux parties d'appui (3a, 3b) adjacente aux bords de la bande de roulement (TE) comporte une pluralité de lamelles (5) ouvertes vers au moins l'un des bords de la bande de roulement (TE) ou les rainures circonférentielles (2a, 2b) ; **caractérisé en ce que** :
un pouvoir adhésif dans un environnement aqueux de l'une ou des deux parties d'appui (3a, 3b) comportant les lamelles (5) qui y sont disposées correspond à 1,96 N ou moins ;
un pouvoir adhésif dans un environnement de 90°C de l'une ou des deux parties d'appui (3a, 3b) comportant les lamelles (5) qui y sont disposées correspond à 2,16 N ou plus ;
le pouvoir adhésif se réfère à un pouvoir adhésif du caoutchouc vulcanisé de l'une ou des deux parties d'appui (3a, 3b) comportant les lamelles (5) qui y sont disposées, qui est une force à un moment de crête mesurée en ajustant respectivement une sonde de forme cylindrique d'un diamètre de 3 mm composée d'acier inoxydable et une plaque de caoutchouc vulcanisé d'une épaisseur de 2 mm fixée sur une plaque métallique dans un environnement aqueux et dans un environnement de 90°C, en pressant la sonde sur le caoutchouc à une vitesse de 30 mm/minute jusqu'à ce que la charge corresponde à 2,94 N, en maintenant cette charge pendant 20 secondes et en retirant la sonde à une vitesse de 120 mm/minute ;
un environnement aqueux se réfère à un état dans lequel un film d'eau d'une épaisseur de 1 mm existe directement sous la sonde lors de la mesure du pouvoir adhésif ; et
un environnement de 90°C se réfère à un état dans lequel la température de la sonde de forme cylindrique et de la plaque de caoutchouc vulcanisé est maintenue à 90° C dans un état sec lors de la mesure du pouvoir adhésif.

2. Bandage pneumatique selon la revendication 1, dans lequel :
chacune de la pluralité de lamelles (5) a une largeur d'ouverture (w) sur la surface de bande de roulement (1) de 0,10 mm ou plus et de 0,35 mm ou moins.

3. Bandage pneumatique selon la revendication 1, dans lequel :
les lamelles (5) s'étendent à un angle d'inclinaison (α) de 30° ou plus et de 60° ou moins par rapport au plan équatorial (CL) du bandage pneumatique.

4. Bandage pneumatique selon la revendication 1, dans lequel :
parmi les flancs (5a, 5b) séparant les lamelles (5), un bord d'ouverture d'au moins un des flancs (5a, 5b) est chanfreiné.
